(19) Europäisches Patentamt / European Patent Office / Office européen des brevets

(11) **EP 1 991 882 B1**

(12) **EUROPEAN PATENT SPECIFICATION**

(45) Date of publication and mention of the grant of the patent:
**02.11.2016 Bulletin 2016/44**

(21) Application number: **06723379.1**

(22) Date of filing: **07.03.2006**

(51) Int Cl.:
***G01S 5/02*** (2006.01)

(86) International application number:
**PCT/EP2006/002272**

(87) International publication number:
**WO 2007/101453 (13.09.2007 Gazette 2007/37)**

(54) **A METHOD OF TRACKING A STATE OF A MOBILE ELECTRONIC DEVICE**

VERFAHREN ZUR VERFOLGUNG EINES ZUSTANDS EINER MOBILEN ELEKTRONISCHEN VORRICHTUNG

METHODE DE SUIVI DE L'ETAT D'UN DISPOSITIF ELECTRONIQUE MOBILE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**19.11.2008 Bulletin 2008/47**

(73) Proprietor: **Nokia Technologies Oy
02610 Espoo (FI)**

(72) Inventors:
• **SIROLA, Niilo
FIN-33100 Tampere (FI)**
• **ALI-LÖYTTY, Simo
FIN-33720 Tampere (FI)**

(74) Representative: **Potter Clarkson LLP
The Belgrave Centre
Talbot Street
Nottingham NG1 5GG (GB)**

(56) References cited:
**WO-A-02/39063**

• **BERGMAN N: "Bayesian Inference in Terrain Navigation" THESIS, XX, XX, no. 649, 1997, page 98pages, XP007901228**
• **CHAFFEE J ET AL: "GPS positioning, filtering, and integration" AEROSPACE AND ELECTRONICS CONFERENCE, 1993. NAECON 1993., PROCEEDINGS OF THE IEEE 1993 NATIONAL DAYTON, OH, USA 24-28 MAY 1993, NEW YORK, NY, USA,IEEE, US, 24 May 1993 (1993-05-24), pages 327-332, XP010115965 ISBN: 0-7803-1295-3**
• **BUCY R S ET AL: "Digital synthesis of non-linear filters" AUTOMATICA UK, vol. 7, no. 3, May 1971 (1971-05), pages 287-298, XP002404159 ISSN: 0005-1098**
• **BERGMAN N ET AL: "Terrain navigation using Bayesian statistics" IEEE CONTROL SYSTEMS MAGAZINE IEEE USA, vol. 19, no. 3, June 1999 (1999-06), pages 33-40, XP011084159 ISSN: 0272-1708**
• **DELLAERT F ET AL: "Monte Carlo localization for mobile robots" PROCEEDINGS 1999 IEEE INTERNATIONAL CONFERENCE ON ROBOTICS AND AUTOMATION (CAT. NO.99CH36288C) IEEE PISCATAWAY, NJ, USA, vol. 2, 1999, pages 1322-1328 vol., XP002404161 ISBN: 0-7803-5180-0**

EP 1 991 882 B1

## Description

The disclosure relates to a method of tracking a state of a mobile electronic device and to a mobile electronic device including processing apparatus arranged to perform the method.

## Background

One of the challenges in personal positioning is to provide accurate position information in situations where there are only a few measurement sources available that might have large errors with unusual distributions, particularly indoors or in urban areas, requiring the efficient numerical solution of the nonlinear filtering equations resulting from the fusion of these different measurement sources. In these cases, it is advantageous that the maximum amount of information be extracted from every measurement.

The behaviour of satellite-based systems such as GPS is unpredictable at best when used indoors in high-sensitivity mode. Local wireless networks, such as the cellular network, WLAN or Bluetooth offer some positioning capability but with inferior accuracy when compared to GPS. Other possible components of a mobile electronic device are the on-board sensors such as accelerometers, barometers or digital compasses.

Combining the various measurement sources is difficult because of different error characteristics, unpredictable distortions, systematic errors in measurements, strong nonlinearity, complex time dependencies, and missing data. It is not simple to model all the cases in a general way, let alone solve the models accurately. Even with correct models, the commonly used Kalman filter and its nonlinear extensions can fail without warning.

WO02/39063A describes a map-aided positioning system for a movable object wherein digital map information and information from state characteristic sensors of the movable object is used in a filtering procedure that based on an initial position indication repeatedly during the movement of the movable object calculates position estimate candidates and a continuously improved position estimate.

N. Bergman, "Bayesian Inference in Terrain Navigation", No. 649, 98 pages (1997), XP007901228 describes a Bayesian approach to terrain navigation. Terrain navigation is a concept for autonomous aircraft navigation. If measurements of the terrain height over mean sea-level are collected along the aircraft flight path, an estimate of the aircraft position can be formed by matching these measurements with a digital reference terrain map. This matching is a recursive nonlinear estimation problem. Due to the unstructured nonlinear reference map, local approximation schemes like the extended Kalman Filter fail in this application. In this thesis, the optimal Bayesian approach to the recursive inference of the measurement sources is taken. In the Bayesian approach, the uncertainty about the aircraft position is condensed in the conditional probability density function. The analytical expression for the recursive propagation of this function is derived. Due to the unstructured nonlinear terrain reference map, the propagation of the conditional density is impossible to perform in practice. To circumvent this problem, an approximation of the conditional density is introduced. The recursion is expressed as an update of a set of point-mass weights distributed over an adaptive grid. An efficient implementation of this update is developed. In realistic simulations, using a commercial map, the proposed point-mass implementation gives reliable estimates with small estimation errors. The most important feature of the algorithm is the ability to track several position hypotheses in the terrain. A Monte Carlo analysis shows that the filter meets the Cramér-Rao lower bound as the grid resolution increases. The Cramér-Rao bound is also utilized to derive an information counterpart of the reference map. This information map reveals the areas where high accuracy navigation can be performed. Furthermore, extensions of the point-mass implementation that accounts for bias errors in the geographic altitude are proposed.

J. Chaffee et al, "GPS positioning, filtering, and integration", Aerospace and Electronics Conference, Proceedings of the IEEE, 327 (1993), XP010115965 explores the possibility of improving navigation solutions and easing integration requirements by using non-linear filters based on direct solutions to the GPS equations. An alternative approach to navigation with GPS and integration of GPS with other sensor systems is discussed. This two-stage method is based on the use of statistical point estimation. After discussing the underlying concept of two-stage estimation, problems encountered in the statistics of point estimation of position and bias from GPS solutions are surveyed. This is followed by a presentation of a closed form maximum likelihood estimator for position and bias based on the assumption of Gaussian errors. Applications to the integration of the GPS with the INS are presented.

R. Busy et al, "Digital synthesis of non-linear filters", Automatica UK, 7, No. 3, 287 (1971), XP002404159 describes techniques which solve the basic two sub-problems associated with optimal discrete-time non-linear estimators: density storage and Bayes-law computation. For density storage a point mass representation on a floating rectangular grid of indices is proposed, while for the Bayes-law computation a simple and effective convolution summation involving an ellipsoid tracking technique to determine the important points to include in the summation is developed. Monte Carlo experiments with the proposed non-linear estimator reveal significant improvement in mean-square error behavior over some conventional approximation realizations. An example is given which illustrates the application of non-linear estimation to tracking and detection systems.

N. Bergman et al, "Terrain navigation using Bayesian statistics", IEEE Control Systems Magazine, 19, No. 3, 33 (1999), XP011084159 describes a point-mass filter (PMF) for terrain-aided navigation of aircraft. The performance of terrain-aided navigation depends on the size of the terrain gradient in the area. The PMF described in this work yields an approximate Bayesian solution that is well suited for the unstructured nonlinear estimation problem in terrain navigation. It recursively propagates a density function of the aircraft position. The shape of the point-mass density reflects the estimate quality; this information is crucial in navigation applications where estimates from different sources often are fused in a central filter. Monte Carlo simulations show that the approximation can reach the optimal performance, and realistic simulations show that the navigation performance is very high compared with other algorithms and that the point-mass filter solves the recursive estimation problem for all the types of terrain covered in the test. The main advantages of the PMF is that it works for many kinds of nonlinearities and many kinds of noise and prior distributions. The mesh support and resolution are automatically adjusted and controlled using a few intuitive design parameters. The main disadvantage is that it cannot solve estimation problems of very high dimension since the computational complexity of the algorithm increases drastically with the dimension of the state space. The implementation used in this work shows real-time performance for 2D and in some cases 3D models, but higher state dimensions are usually intractable.

**Summary**

The present invention comprises a method, computer program, apparatus, mobile electronic device and system as defined in the claims.

According to a first aspect of the disclosure, there is provided a method of tracking a state of a mobile electronic device, the method comprising iteratively performing the steps of

(i) representing the state of the mobile electronic device using a grid comprising a plurality of cells, each cell representing a region in state space defined by one or more state variables and having a probability value that the state of the mobile electronic device is within that region in state space, the grid being bounded to include only cells having a probability value above a predetermined threshold;

(ii) obtaining measurement signalling indicating values of one or more state variables;

(iii) updating the probability values of the grid based on the measurement signalling and rebounding the grid.

The state of the mobile electronic device may comprise the state variables including but not limited to position, velocity, acceleration, and clock error, whether alone or in combination.

The number of dimensions of the state space corresponds to the total number of dimensions of the state variables, with each cell including a number of dimensions equal to that of the state space. For example, the state space and the cells may be six-dimensional to represent position in three dimensions and velocity in three dimensions.

The invention provides means whereby all information is retained from measurement geometries that do not produce a unique position solution or that produce multiple solutions, and whereby the shape of the posterior distribution is retained without dropping any of its peaks.

The invention is faster to run than a particle filter, is more general than location fingerprint methods, and propagates the complete position distribution, thus being able to represent undetermined or multiple-solution systems accurately.

Preferably, the grid is a uniformly-spaced parallelepiped grid, in order to alleviate problems regarding the computation load of the method.

Step (i) in respect of one or more iterations may comprise obtaining measurement signalling and forming the grid based on the measurement signalling. A position estimate may be derived from measurement signalling comprising any of, for example, a range, a range difference or a planar measurement. A range measurement may be obtained from cellular base stations, WLAN or Bluetooth transmitters, and/or acoustic sensors, and may be in the form of a time delay, round-trip or signal strength measurement, for example. Other types of measurement signalling indicating position include but are not limited to angle of arrival measurements, maximum-minimum range windows, base sector information, and on-board barometers and digital compasses. Velocity can be measured using deltarange and heading measurements. Acceleration can be measured using on-board accelerometers.

It is to be understood that the details of the measurement signalling are not important to the invention, provided that the value(s) of the state variable(s) in question can be obtained or estimated using the measurement signalling, whether used alone or in conjunction with other measurement signalling.

Step (i) in respect of one or more of a second and subsequent iterations may comprise using the updated grid of step (iii) of a preceding iteration.

The one or more iterations may comprise the step of (iv) predicting the probability values of the grid of the subsequent iteration based on the updated grid and a motion model for the mobile electronic device to obtain a predicted grid.

Step (iv) may include rebounding the grid, and/or using the predicted grid in step (i) of the subsequent iteration.

Rebounding the grid may comprise moving a boundary of the grid to exclude cells having a probability value below the predetermined threshold, and/or moving the boundary to include cells having a probability value above the predetermined threshold. In some cases, cells exist beyond the boundary but have a probability value of zero. If, following any process, the probability value of such cells increases, the boundary is moved so as to include any such cells having probability values above the predetermined threshold. In some cases, no cells exist beyond the boundary. Following any process which results in alteration of probability values, the invention may comprise the step of defining temporary cells beyond the boundary, calculating probability values for these cells, and moving the boundary to include any such cells having probability values above the predetermined threshold.

Preferably, the motion model is linear, in order to alleviate problems regarding the computation load of the method.

One or more iterations may comprise the step of (v) calculating an expected value and a variance for the state of the mobile electronic device based on the updated grid.

According to a second aspect of the disclosure, there is provided a mobile electronic device including processing apparatus arranged to perform the method of the first aspect.

The present disclosure also comprises a computer program arranged to perform the method and a system in which the mobile electronic device operates. The disclosure encompasses one or more aspects and embodiments in various combinations whether or not specifically mentioned (or claimed) in that combination.

## Brief Description of the Drawings

A description is now given, by way of example only, reference being made to the accompanying drawings, in which: -

Figures 1 to 5 illustrate a simple example of the method being performed;
Figure 6 shows apparatus for performing the method.

## Detailed Description

In the following description, like reference numerals refer to like features regardless as to which embodiment the features belong.

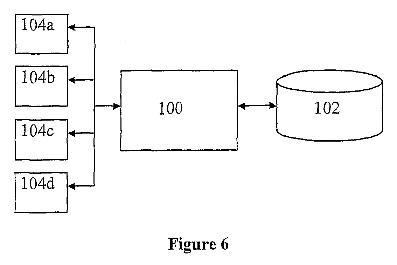

Figure 6 is a schematic diagram of part of a mobile electronic device, the mobile electronic device including a processor 100 in communication with memory 102 and with a plurality of transceiver modules 104a-d. Memory 102 includes software code portions for performing the method, as will be described below. Transceiver modules 104a-d are capable of receiving measurement signalling respectively from the GPS system, cellular base stations, WLAN transmitters and Bluetooth transmitters. Transceiver modules 104a-d are referred to as such for convenience; in fact, some of the modules 104a-d may not have the capability to transmit, while others may be required to transmit in order to receive measurement signalling.

The method will now be described, using the following nomenclature.

Subscript $k$ indexes the time instant

| | |
|---|---|
| $k\|k-1$ | refers to inference made on time step $k$ using data only up to time $k-1$ |
| $k\|k$ | refers to inference made on time step $k$ using data up to time $k$ |
| $x$ | the state of the mobile electronic device |
| $i$ | the vector index of a cell |
| $G_k(i)$ | $i$th cell |
| $c_k(i)$ | centre of the $i$th cell |
| $E_k$ | square matrix whose columns define the edges of a cell |
| $\pi_{k\|k-1}(i)$ | prior probability value of the $i$th cell |
| $\pi_{k\|k}(i)$ | posterior probability value of the $i$th cell |
| $\phi_k(x\|z)$ | probability density of state $x$ if the previous state was $z$ |
| $L_k(x)$ | measurement likelihood function |
| $\tau_k(i\text{-}j)$ | probability (based on motion model) of moving from $j$th cell to $i$th cell |

### *Step (i)*

In this step, the state $x_k$ of the mobile electronic device is represented using a grid comprising a plurality of cells. Each cell represents a region in state space and has a probability value that the state $x_k$ of the mobile electronic device is within that region.

For example, the state $x_k$ may comprise the three-dimensional state variables position $r_k$ and velocity $v_k$,

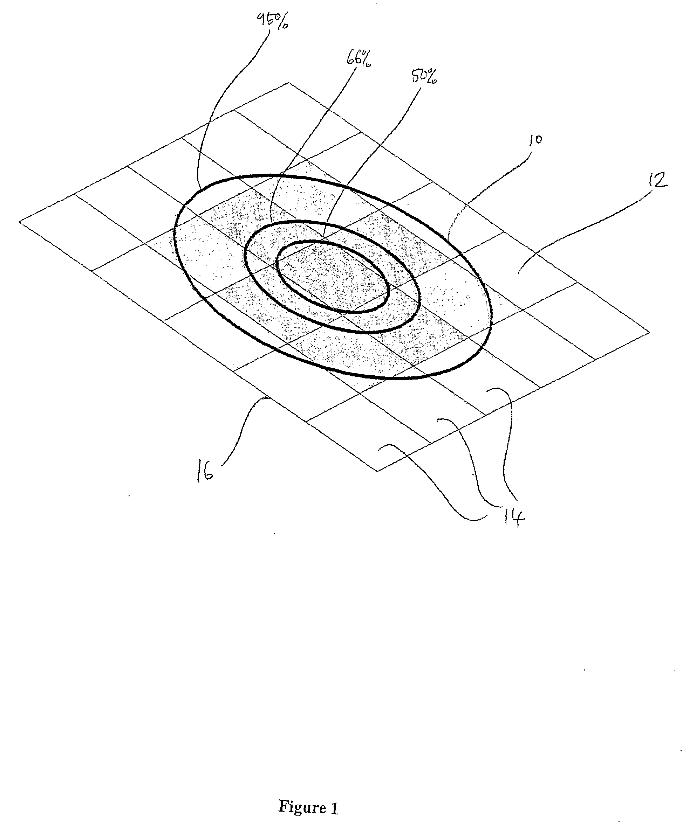

$$x_k = \begin{bmatrix} r_k \\ v_k \end{bmatrix}.$$ Each cell is then six-dimensional to represent six-dimensional regions of state space. However, for illustrate purposes, Figures 1 to 5 show a simple example in which the state $x_k$ comprises a two-dimensional position $r_k$.

Figure 1 shows a prior distribution 10 for the position of the mobile electronic device having 95%, 66% and 50% confidence regions. The prior distribution 10 may be derived from one of several sources: (i) a posterior distribution of a preceding iteration of the method; (ii) a predicted prior distribution obtained by altering the posterior distribution using a motion model to predict the movement of the mobile electronic device; and (iii) measurement signalling obtained via any of the transceiver modules 104a-d. In case several of the above sources are available, a combination can be used.

The prior distribution 10 is approximated using a prior grid 12 consisting of a number of two-dimensional cells 14 of uniform size and shape. Each cell 14 represents a region on the surface of the earth and has a prior probability value that the mobile electronic device is positioned within that region.

It is to be understood that Figure 1 shows the prior distribution 10 as represented by the confidence regions on the grid 12 for illustrative purposes only. Although the prior distribution 10 is shown in Figure 1 to be continuous, it would exist in the memory 102 of the mobile electronic device only in an approximated form by the probability values of the prior grid 12. The relative shading of the cells 14 in Figure 1 represents the probability value, i.e. a darker-shaded cell 14 indicates a higher probability value for the cell 14.

The prior grid 12 includes a boundary 16 within which all cells 14 have a prior probability value above a predetermined threshold. Thus, the grid approximation of the prior distribution is truncated by the boundary 16 to represent a significant domain $S$, being a (simply connected) region in $\mathfrak{R}^d$, in which the prior probability values are non-negligible.

In the example of Figure 1, the threshold is set such that 99% of the prior distribution is represented by the prior grid 12. However, it is to be understood that the level of the threshold is a matter of design choice. A lower threshold would result in more cells 14 being included within the boundary 16, and therefore in a more accurate approximation, albeit at the expense of an increased computational load. In contrast, a higher threshold would result in fewer cells 14 being included within the boundary, and therefore in a less accurate approximation with a reduced computational load.

Only cells 14 within the boundary 16 are defined in the memory 102 of the mobile electronic device. In a variant, the memory 102 defines cells beyond the boundary but with the prior probability value of these cells set to zero. In either case, the approximation by the prior grid 12 of the prior distribution 10 is truncated by the boundary 16 to facilitate computation.

The number of cells 14 in the prior grid 12 is a matter of design choice, in order to find a balance between computation load and accuracy. One extreme choice is to generate a large number of small cells. In this case, the approximation is asymptotically accurate even if the probability values are suboptimal, as is the case in the known point-mass filter, which uses only a density value being equivalent to that in the centre of a cell 14 according to the invention. Another extreme choice is to use a small number of large cells 14. It is then advantageous that the prior probability values be computed as accurately as possible. Most of the structure of the prior distribution 10 is lost when approximated with large cells 14. Optimally, the cells 14 should not be much smaller than the finest features of the prior distribution 10.

In this step, the time index $k$ is set to $k = 1$.

### Step (ii)

In this step, measurement signalling is obtained via the transceiver modules 104a-d indicating values of one or more state variables.

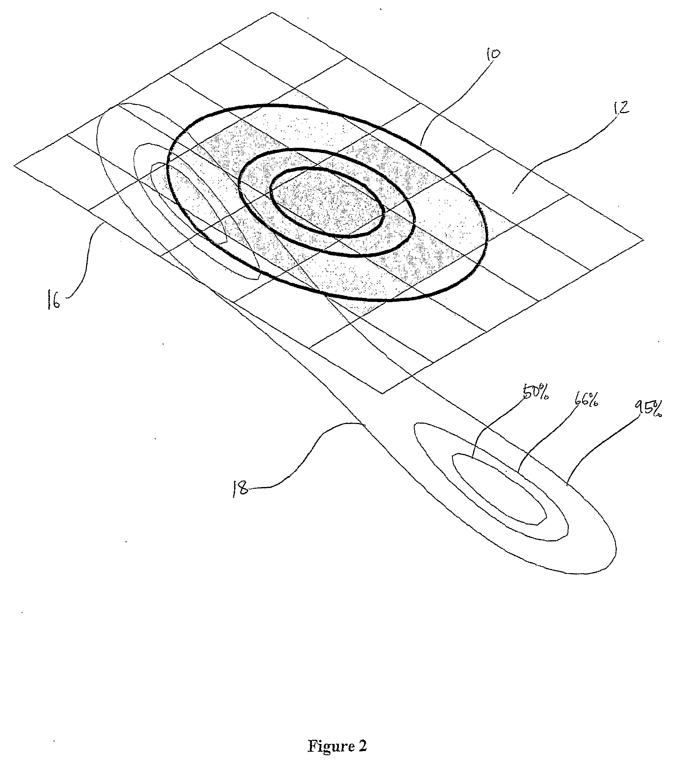

Figure 2 shows a measurement likelihood function 18 representing an estimated position of the mobile electronic device based on measurement signalling obtained via the transceiver modules 104a-d. As shown, the measurement likelihood function includes 95%, 66% and 50% confidence regions.

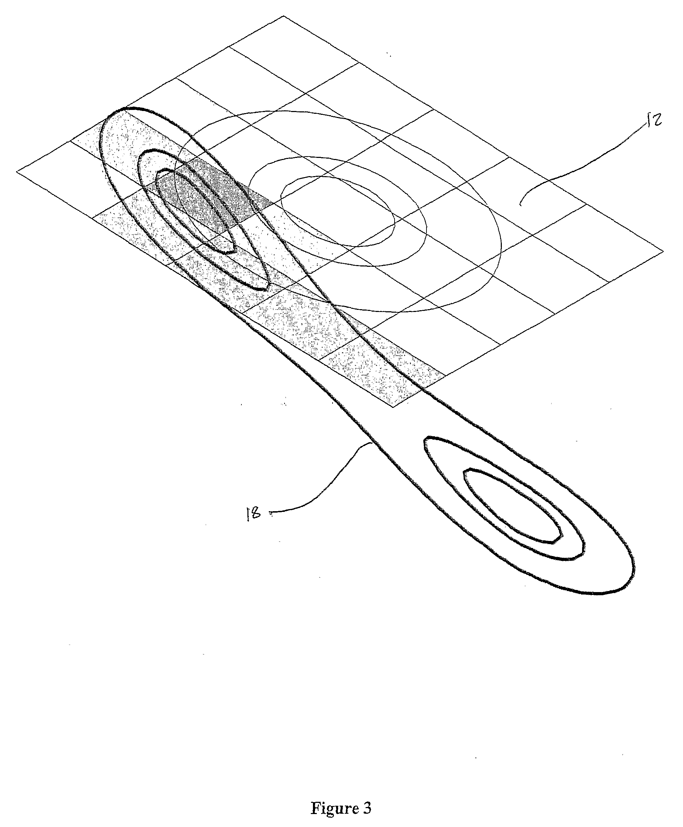

Figure 3 shows the measurement likelihood function 18 being approximated using the prior grid 12 in a similar manner to the prior distribution 10. In Figure 3, the probability values, which again represent the probabilities that the mobile electronic device is positioned within the regions represented by respective cells 14, are based only on the measurement likelihood function 18.

Although in Figure 3 the measurement likelihood function 18 is approximated using the same prior grid 12 as for the prior distribution 10, it is to be understood that the measurement likelihood function could be represented using a grid of different size, shape and/or orientation, but that this would require more computation.

The measurement signalling may comprise any of, for example, a range, a range difference or a planar measurement in order to obtain a position estimate.

Given the true position $r$, a range measurement to a station at position $s$ can be written as $h(r) = \|s-r\|$. The associated measurement error $v$ need not be normal, and is represented by an empirically-determined distribution that matches the real situation.

The biased range measurements obtained from the GPS system are treated as range differences. One of the stations is chosen as reference station and all the differences are formed with respect to it. If the reference station is at $s_0$, the range difference measurement is $h(r)=\|s\text{-}r\|\text{-}\|s_0\text{-}r\|$.

Finally, the planar measurement is $h(r) = u^T r$, where $u$ is a unit vector.

During this step, all available measurements are stacked into a vector $y_k$ and the corresponding measurement equations into a vector function $h_k(x)$ .

As an example, consider the case with $n_d$ range difference measurements, $n_r$ range measurements, and $n_p$ planar measurements. Then the measurement vector is $y = [d_1...d_{nd}\ r_1...r_{nr}\ a_1...a_{np}]^T$, and the measurement model is

$$h(x) = \begin{bmatrix} \|s_1 - x\| - \|s_0 - x\| \\ \vdots \\ \|s_{nd} - x\| - \|s_0 - x\| \\ \|s_{nd+1} - x\| \\ \vdots \\ \|s_{nd+nr} - x\| \\ u_1^T x \\ \vdots \\ u_{n_p}^T x \end{bmatrix}.$$

If all the measurement errors have normal distributions, the measurement likelihood function 18 is

$$L(x) \propto e^{-\frac{1}{2}(h(x)-y)^T \Sigma^{-1}(h(x)-y)},$$ where $\Sigma$ is the covariance matrix of the measurement errors $v$.

### Step (iii)

In this step, the prior probability values of the prior grid 12 are updated based on the measurement signalling to produce a posterior grid 12', and the posterior grid 12' is rebounded.

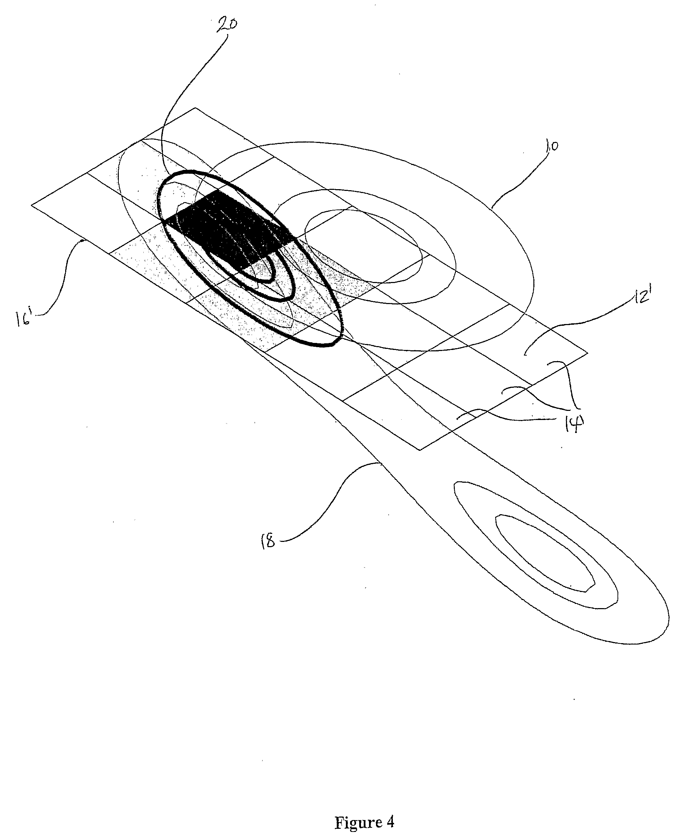

Figure 4 shows a posterior distribution 20 having been derived from the prior distribution 10 and the measurement likelihood function 18. The posterior distribution 20 is represented by a posterior grid 12' having cells 14', each cell 14' having a posterior probability value to approximate the posterior distribution 20.

The posterior probability values of the posterior grid 12' are found by multiplying the prior probability value in each cell 14 with the total likelihood in the cell 14, found by integrating the likelihood function over the cell 14:

$$\hat{p}_{k|k}(x) \propto \hat{p}_{k|k-1}(x) L_k(x) \approx \sum_{i=0}^{n_k} \pi_{k|k}(i) \chi_{G_k(i)}(x), \text{ where } \pi_{k|k}(i) = \pi_{k|k-1}(i) \int_{G_k(i)} L_k(\xi) d\xi$$

The posterior grid 12' is rebounded with new boundary 16' to include only cells 14' having a probability value above the predetermined threshold. If a cell 14 within previous boundary 16 has a posterior probability value below the predetermined threshold, the new boundary 16' is placed so as to exclude that cell 14.

### Step (iv)

In this optional step, a predicted grid 12" having cells 14" is obtained based on the posterior grid 12' of the current iteration and a motion model for the mobile electronic device. The predicted grid 12" forms the prior grid 12 of the subsequent iteration.

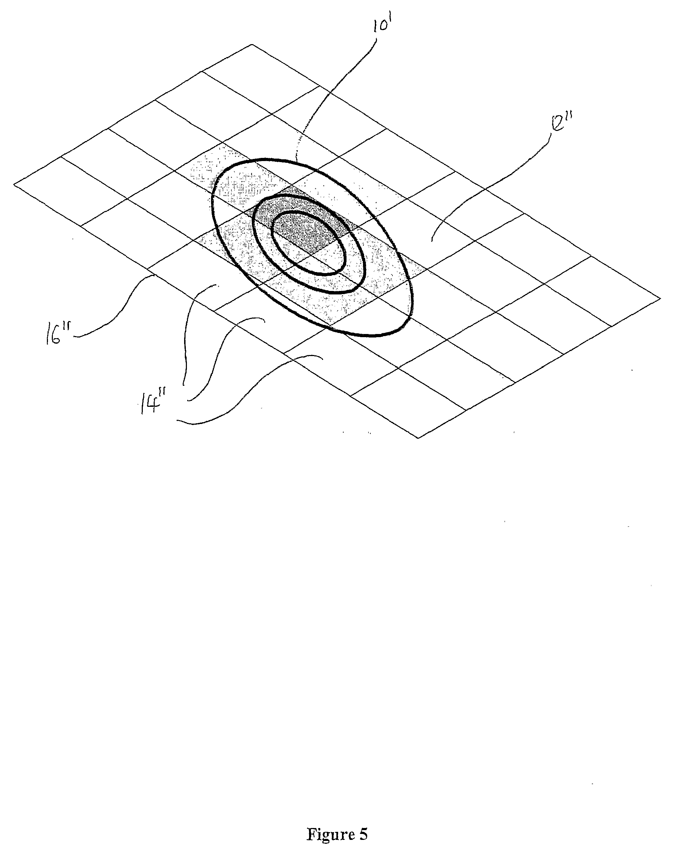

Figure 5 shows the predicted prior distribution 10' following application of the motion model, the motion model being any suitable model such as a constant-velocity-normally-distributed-acceleration model or a singer model. The predicted prior distribution 10' will form the prior distribution 10 of the subsequent iteration of the method.

The predicted prior probability value of a cell 14" is found by summing all probabilities values in the current iteration weighted by the probabilities of transition to that cell 14", according to the following equations. The predicted prior distribution 10' is normalized after all probability values have been computed.

$$\hat{p}_{k|k-1}(x) = \int_{\Re^d} \phi_{k-1}(x \mid \xi)\hat{p}_{k-1|k-1}(\xi)d\xi \approx \sum_{i=0}^{nk} \pi_{k|k-1}(i)\chi_{G_k(i)}(x).$$

Denoting the volume of each cell 14" with $\alpha_k = |\det E_k|$, the predicted prior probability values $\pi_{k|k-1}$ (i) are computed by integrating the predictive pdf over the cell 14":

$$\pi_{k|k-1}(i) = \frac{1}{\alpha_k} \int_{G_k(i)} p_{k|k-1}(v)dv = \frac{1}{\alpha_k} \int_{G_k(i)} \left[ \int \phi_{k-1}(v \mid \xi)p_{k-1|k-1}(\xi)d\xi \right]dv$$

Replacing $p_{k-1|k-1}$ with its grid approximation yields $\pi_{k|k-1}(i) \approx \frac{1}{\alpha_k} \sum_{j=0}^{n_{k-1}} \pi_{k-1|k-1}(j)\Gamma_k(i \mid j)$, where $\Gamma_k(i|j)$ is the transition probability from $j$th cell of the (k -1)th grid to $i$th cell of the $k$th grid.

In the interest of computational efficiency, a linear motion model is used, e.g. $f(x) \equiv Tx$. The predicted grid 12" is formed by applying the motion model to the posterior grid 12'. The transition probability between the $i$th cell in the old grid and the $j$th cell of the new grid depends only on the difference $i - j$, and we can write $\Gamma_k(i|j) = \tau_k(i-j)$. The predicted prior probability values become $\Re^d$ which is fast to compute as a d -dimensional discrete linear convolution.

Now the transition probability $\tau_k(i - j)$ is

$$\tau_k(i - j) = \frac{1}{\alpha_{k-1}\alpha_k} \int_{c_k(i)+E_kK} \left[ \int_{c_{k-1}(j)+E_{k-1}K} \phi(v \mid \xi)d\xi \right]dv \quad \text{where} \quad K = (-\frac{1}{2},\frac{1}{2}]^d.$$

This can be simplified to

$$\tau_k(i - j) = \int_K p_{w_k}\left[E_k(i - j) + e_k - Te_{k-1} + E_k\lambda\right]d\lambda = \int_K p_{w_k,i-j}(\lambda)d\lambda$$

(12)

where $p_{w_k,i-j}$ is shorthand for the modified process noise probability density function. Specifically, if $w_k \sim N(0,Q)$, then

$$w_{k,i-j} \sim N(j - i - E_k^{-1}(e_k - Te_{k-1}),(E_k^{-1})^T QE_k^{-1})$$

The integral then is just multinormal probability in a hyper-box and can be computed numerically.

If $w_k$ is non-Gaussian, the transition probabilities $\tau_k(i - j)$ can be computed using the cumulative distribution.

Following the application of the motion model, the boundary 16' is moved to become boundary 16" which includes all cells 14" both within and beyond the previous boundary 16' having a predicted probability value above the predetermined threshold.

In the case where cells 14" existed beyond the previous boundary 16' and had prior and posterior probability values of zero, the new boundary 16" is placed to include any of these cells 14" which have a predicted probability value above the predetermined threshold.

In the variant wherein no cells existed beyond the previous boundary 16', new cells 14" are added having a size, shape and orientation corresponding to that of existing cells 14', and the new boundary 16" is placed so as to include the new cells 14". It is to be understood that the size, shape and/or orientation of the new cells 14" need not coincide with those of the existing predicted grid 12". It can readily be determined whether such non-existent cells would have a probability value above the predetermined threshold by defining a number of temporary cells 14" beyond the previous boundary 16' and calculating predicted probability values for the temporary cells 14". Such temporary cells 14" are continually defined and their probability values calculated until a point is reached where a shell of temporary cells 14" having probability values below the threshold is created. The new boundary 16" is then placed so as to include all temporary cells 14" having probability values above the threshold.

*Step (v)*

In this step, an expected value and a variance for the state of the mobile electronic device are calculated based on the predicted grid 12", according to the following equations.

$$\mu_k = \left| \det E_k \right| \sum_{i=0}^{n} \pi_{k|k}(i) c_k(i)$$

$$\sum\nolimits_k = \left| \det E_k \right| \sum_{i=0}^{n} \pi_{k|k}(i) c_k(i) c_k(i)^T - \mu_k \mu_k^T + \frac{\left| \det E_k \right|}{12} E_k E_k^T$$

$$(10)$$

Finally, the time index *k* is increased and the method repeated from Step (i).

It will be understood that the present approach uses a grid-mass approach to perform the method of tracking a state of a mobile electronic device.

**Claims**

1.    A method of tracking a state of a mobile electronic device, the method comprising iteratively performing the steps of

(i) representing the state of the mobile electronic device using a grid (12) comprising a plurality of cells (14), each cell (14) representing a region in state space defined by one or more state variables and having a first probability value that the state of the mobile electronic device is within that region in state space, the grid (12) being bounded (16) to include only cells (14) having a probability value above a predetermined threshold;
(ii) obtaining measurement signalling indicating values of one or more state variables;
(iii) updating the first probability values of the grid (12) to obtain an updated grid (12') comprising cells (14') having a second probability value, and moving the boundary (16) of the grid (12) to exclude cells (14) having a probability value below the predetermined threshold and/or include cells (14') having a probability value above the predetermined threshold, the second probability value of a cell (14') of the updated grid (12') found by multiplying the first probability value with an integration of a measurement likelihood function (18) over the corresponding cell (14) of the grid (12), the measurement likelihood function (18) representing an estimated position of the mobile electronic device based on the measurement signalling; and
(iv) predicting third probability values of the grid (12) based on the updated grid (12') and a motion model for the mobile electronic device to obtain a predicted grid (12") for use in step (i) of a subsequent iteration, the third probability value of a cell (14") of the predicted grid (12") found by summing all second probability values in the current iteration weighted by the probability of transition to the cell (14") of the predicted grid (12").

2.    The method of claim 1 wherein the grid (12) is a uniformly-spaced parallelepiped grid.

3.    The method of claim 1 wherein step (i) in respect of the first iteration comprises obtaining measurement signalling and forming the grid (12) based on the measurement signalling.

4.    The method of claim 1 wherein step (iv) comprises moving the boundary (16') of the updated grid (12') to exclude cells (14') having a probability value below the predetermined threshold and/or include cells (14") having a probability value above the predetermined threshold.

5.    The method of claim 1 wherein the motion model is linear.

**6.** The method of claim 1 wherein one or more iterations comprise the step of

(v) calculating an expected value and a variance for the state of the mobile electronic device based on the predicted grid (12").

**7.** A computer program for use in tracking a state of a mobile electronic device, the computer program comprising computer code configured to perform the method of claim 1.

**8.** An apparatus for use in tracking a state of a mobile electronic device, the apparatus comprising a processor (100) and memory (102) including computer program code, the memory (102) and computer program code configured to, with the processor (100), cause the apparatus to iteratively perform the following steps:

(i) represent the state of the mobile electronic device using a grid (12) comprising a plurality of cells (14), each cell (14) representing a region in state space defined by one or more state variables and having a first probability value that the state of the mobile electronic device is within that region in state space, the grid (12) being bounded (16) to include only cells (14) having a probability value above a predetermined threshold;
(ii) obtain measurement signalling indicating values of one or more state variables;
(iii) update the first probability values of the grid (12) to obtain an updated grid (12') comprising cells (14') having a second probability value, and moving the boundary (16) of the grid (12) to exclude cells (14) having a probability value below the predetermined threshold and/or include cells (14') having a probability value above the predetermined threshold, the second probability value of a cell (14') of the updated grid (12') found by multiplying the first probability value with an integration of a measurement likelihood function (18) over the corresponding cell (14) of the grid (12), the measurement likelihood function (18) representing an estimated position of the mobile electronic device based on the measurement signalling; and
(iv) predict third probability values of the grid (12) based on the updated grid (12') and a motion model for the mobile electronic device to obtain a predicted grid (12") for use in step (i) of a subsequent iteration, the third probability value of a cell (14") of the predicted grid (12") found by summing all second probability values in the current iteration weighted by the probability of transition to the cell (14") of the predicted grid (12").

**9.** The apparatus of claim 8, wherein the apparatus is configured to represent the state of the mobile electronic device using a uniformly-spaced parallelepiped grid (12).

**10.** The apparatus of claim 8, wherein the apparatus is configured to represent the state of the mobile electronic device in the first iteration by obtaining measurement signalling and forming the grid (12) based on the measurement signalling.

**11.** The apparatus according to claim 8, wherein the apparatus is configured to move the boundary (16') of the updated grid (12') in step (iv) to exclude cells (14') having a probability value below the predetermined threshold and/or include cells (14") having a probability value above the predetermined threshold.

**12.** The apparatus according to claim 8, wherein the apparatus is configured to use a linear motion model to predict the third probability values of the grid (12).

**13.** The apparatus according to claim 8, wherein the apparatus is configured to, in one or more iterations, calculate an expected value and a variance for the state of the mobile electronic device based on the predicted grid (12").

**14.** A mobile electronic device comprising the apparatus of claim 8, wherein the apparatus is configured for use in tracking a state of the mobile electronic device.

**15.** A system comprising the mobile electronic device of claim 14 and an apparatus for providing measurement signalling to the mobile electronic device.

**Patentansprüche**

**1.** Verfahren zum Verfolgen eines Zustands einer mobilen elektronischen Einrichtung, wobei das Verfahren das iterative Durchführen der folgenden Schritte umfasst:

(i) Darstellen des Zustands der mobilen elektronischen Einrichtung unter Verwendung eines Gitters (12), das mehrere Zellen (14) umfasst, wobei jede Zelle (14) einen Bereich im Zustandsraum darstellt, der durch eine oder durch mehrere Zustandsvariablen definiert ist, und einen ersten Wahrscheinlichkeitswert aufweist, dass sich der Zustand der mobilen elektronischen Einrichtung in jenem Bereich im Zustandsraum befindet, wobei das Gitter (12) derart begrenzt (16) ist, dass es nur Zellen (14) enthält, die einen Wahrscheinlichkeitswert über einem vorgegebenen Schwellenwert aufweisen;

(ii) Erhalten einer Messsignalisierung, die die Werte einer oder mehrerer Zustandsvariablen angibt;

(iii) Aktualisieren der ersten Wahrscheinlichkeitswerte des Gitters (12), um ein aktualisiertes Gitter (12') zu erhalten, das die Zellen (14') umfasst, die einen zweiten Wahrscheinlichkeitswert aufweisen, und Bewegen der Begrenzung (16) des Gitters (12), um die Zellen (14) auszuschließen, die einen Wahrscheinlichkeitswert unter dem vorgegebenen Schwellenwert aufweisen, und/oder um die Zellen (14') einzuschließen, die einen Wahrscheinlichkeitswert über dem vorgegebenen Schwellenwert aufweisen, wobei der zweite Wahrscheinlichkeitswert einer Zelle (14') des aktualisierten Gitters (12') durch Multiplizieren des ersten Wahrscheinlichkeitswerts mit einer Integration einer Messwahrscheinlichkeitsfunktion (18) über die entsprechende Zelle (14) des Gitters (12) ermittelt wird, wobei die Messwahrscheinlichkeitsfunktion (18) auf der Basis der Messsignalisierung eine geschätzte Position der mobilen elektronischen Einrichtung darstellt; und

(iv) Vorhersagen von dritten Wahrscheinlichkeitswerten des Gitters (12) auf der Basis des aktualisierten Gitters (12') und eines Bewegungsmodells für die mobile elektronische Einrichtung, um ein vorhergesagtes Gitter (12") zur Verwendung im Schritt (i) einer nachfolgenden Iteration zu erhalten, wobei der dritte Wahrscheinlichkeitswert einer Zelle (14") des vorhergesagten Gitters (12") durch Summieren aller zweiten Wahrscheinlichkeitswerte in der aktuellen Iteration, gewichtet mit der Wahrscheinlichkeit der Übertragung auf die Zelle (14") des vorhergesagten Gitters (12"), ermittelt wird.

2. Verfahren nach Anspruch 1, wobei das Gitter (12) ein Parallelepiped-Gitter mit gleichmäßigem Abstand ist.

3. Verfahren nach Anspruch 1, wobei der Schritt (i) bezogen auf die erste Iteration das Erhalten der Messsignalisierung und das Bilden des Gitters (12) auf der Basis der Messsignalisierung umfasst.

4. Verfahren nach Anspruch 1, wobei der Schritt (iv) das Bewegen der Begrenzung (16') des aktualisierten Gitters (12') umfasst, um die Zellen (14') auszuschließen, die einen Wahrscheinlichkeitswert unter dem vorgegebenen Schwellenwert aufweisen und/oder um die Zellen (14") einzuschließen, die einen Wahrscheinlichkeitswert über dem vorgegebenen Schwellenwert aufweisen.

5. Verfahren nach Anspruch 1, wobei das Bewegungsmodell linear ist.

6. Verfahren nach Anspruch 1, wobei eine oder mehrere Iterationen den Schritt (v) des Berechnens eines erwarteten Werts und einer Varianz für den Zustand der mobilen elektronischen Einrichtung auf der Basis des vorhergesagten Gitters (12") umfassen.

7. Computerprogramm zur Verwendung beim Verfolgen eines Zustands einer mobilen elektronischen Einrichtung, wobei das Computerprogramm Computercode umfasst, der konfiguriert ist, das Verfahren nach Anspruch 1 durchzuführen.

8. Vorrichtung zur Verwendung beim Verfolgen eines Zustands einer mobilen elektronischen Einrichtung, wobei die Vorrichtung einen Prozessor (100) und einen Speicher (102), der Computerprogrammcode enthält, umfasst, wobei der Speicher (102) und der Computerprogrammcode konfiguriert sind, mit dem Prozessor (100) zu bewirken, dass die Vorrichtung iterativ die folgenden Schritte durchführt:

(i) Darstellen des Zustands der mobilen elektronischen Einrichtung unter Verwendung eines Gitters (12), das mehrere Zellen (14) umfasst, wobei jede Zelle (14) einen Bereich im Zustandsraum darstellt, der durch eine oder durch mehrere Zustandsvariablen definiert ist, und einen ersten Wahrscheinlichkeitswert aufweist, dass sich der Zustand der mobilen elektronischen Einrichtung in jenem Bereich im Zustandsraum befindet, wobei das Gitter (12) derart begrenzt (16) ist, dass es nur Zellen (14) enthält, die einen Wahrscheinlichkeitswert über einem vorgegebenen Schwellenwert aufweisen;

(ii) Erhalten einer Messsignalisierung, die die Werte einer oder mehrerer Zustandsvariablen angibt;

(iii) Aktualisieren der ersten Wahrscheinlichkeitswerte des Gitters (12), um ein aktualisiertes Gitter (12') zu erhalten, das die Zellen (14') umfasst, die einen zweiten Wahrscheinlichkeitswert aufweisen, und Bewegen der Begrenzung (16) des Gitters (12), um die Zellen (14) auszuschließen, die einen Wahrscheinlichkeitswert unter dem vorgegebenen Schwellenwert aufweisen, und/oder um die Zellen (14') einzuschließen, die einen Wahrscheinlichkeitswert über dem vorgegebenen Schwellenwert aufweisen, wobei der zweite Wahrscheinlichkeitswert einer Zelle (14') des aktualisierten Gitters (12') durch Multiplizieren des ersten Wahrscheinlichkeitswerts mit einer Integration einer Messwahrscheinlichkeitsfunktion (18) über die entsprechende Zelle (14) des Gitters (12) ermittelt wird, wobei die Messwahrscheinlichkeitsfunktion (18) auf der Basis der Messsignalisierung eine geschätzte Position der mobilen elektronischen Einrichtung darstellt; und

(iv) Vorhersagen von dritten Wahrscheinlichkeitswerten des Gitters (12) auf der Basis des aktualisierten Gitters (12') und eines Bewegungsmodells für die mobile elektronische Einrichtung, um ein vorhergesagtes Gitter (12") zur Verwendung im Schritt (i) einer nachfolgenden Iteration zu erhalten, wobei der dritte Wahrscheinlichkeitswert einer Zelle (14") des vorhergesagten Gitters (12") durch Summieren aller zweiten Wahrscheinlichkeitswerte in der aktuellen Iteration, gewichtet mit der Wahrscheinlichkeit der Übertragung auf die Zelle (14") des vorhergesagten Gitters (12"), ermittelt wird.

9. Vorrichtung nach Anspruch 8, wobei die Vorrichtung konfiguriert ist, den Zustand der mobilen elektronischen Einrichtung unter Verwendung eines Parallelepiped-Gitters (12) mit gleichmäßigem Abstand darzustellen.

10. Vorrichtung nach Anspruch 8, wobei die Vorrichtung konfiguriert ist, den Zustand der mobilen elektronischen Einrichtung in der ersten Iteration durch Erhalten einer Messsignalisierung und durch Bilden des Gitters (12) auf der Basis der Messsignalisierung darzustellen.

11. Vorrichtung nach Anspruch 8, wobei die Vorrichtung konfiguriert ist, die Begrenzung (16') des aktualisierten Gitters (12') in Schritt (iv) zu bewegen, um die Zellen (14') auszuschließen, die einen Wahrscheinlichkeitswert unter dem vorgegebenen Schwellenwert aufweisen und/oder um die Zellen (14") einzuschließen, die einen Wahrscheinlichkeitswert über dem vorgegebenen Schwellenwert aufweisen.

12. Vorrichtung nach Anspruch 8, wobei die Vorrichtung konfiguriert ist, ein lineares Bewegungsmodell zu verwenden, um die dritten Wahrscheinlichkeitswerte des Gitters (12) vorherzusagen.

13. Vorrichtung nach Anspruch 8, wobei die Vorrichtung konfiguriert ist, in einer oder in mehreren Iterationen auf der Basis des vorhergesagten Gitters (12") einen erwarteten Wert und eine Varianz für den Zustand der mobilen elektronischen Einrichtung zu berechnen.

14. Mobile elektronische Einrichtung, die die Vorrichtung nach Anspruch 8 umfasst, wobei die Vorrichtung zur Verwendung zum Verfolgen eines Zustands der mobilen elektronischen Einrichtung konfiguriert ist.

15. System, das die mobile elektronische Einrichtung nach Anspruch 14 und eine Vorrichtung zum Bereitstellen einer Messsignalisierung an die mobile elektronische Einrichtung umfasst.

**Revendications**

1. Procédé de suivi de l'état d'un dispositif électronique mobile, le procédé comportant l'exécution itérative des étapes consistant à

(i) représenter l'état du dispositif électronique mobile à l'aide d'une grille (12) comportant une pluralité de cellules (14), chaque cellule (14) représentant une région dans un espace des états défini par une ou plusieurs variables d'état et présentant une première valeur de probabilité que l'état du dispositif électronique mobile se trouve à l'intérieur de la région en question de l'espace des états, la grille (12) étant bornée (16) pour n'inclure que les cellules (14) présentant une valeur de probabilité supérieure à un seuil prédéterminé ;

(ii) obtenir une signalisation de mesure indiquant des valeurs d'une ou plusieurs variables d'état ;

(iii) actualiser les premières valeurs de probabilité de la grille (12) pour obtenir une grille actualisée (12') comportant des cellules (14') présentant une deuxième valeur de probabilité, et déplacer la frontière (16) de la grille (12) pour exclure les cellules (14) présentant une valeur de probabilité inférieure au seuil prédéterminé et/ou inclure les cellules (14') présentant une valeur de probabilité supérieure au seuil prédéterminé, la deuxième valeur de probabilité d'une cellule (14') de la grille actualisée (12') étant déterminée en multipliant la première valeur de probabilité par l'intégrale d'une fonction (18) de vraisemblance de mesure sur la cellule (14) correspondante de la grille (12), la fonction (18) de vraisemblance de mesure représentant une position estimée du dispositif électronique mobile basée sur la signalisation de mesure ; et

(iv) prédire des troisièmes valeurs de probabilité de la grille (12) d'après la grille actualisée (12') et sur un modèle de mouvement du dispositif électronique mobile pour obtenir une grille prédite (12") destinée à être utilisée à l'étape (i) d'une itération ultérieure, la troisième valeur de probabilité d'une cellule (14") de la grille prédite (12") étant déterminée en sommant toutes les deuxièmes valeurs de probabilité de l'itération actuelle pondérées par la probabilité de transition vers la cellule (14") de la grille prédite (12").

2. Procédé selon la revendication 1, la grille (12) étant une grille parallélépipédique d'espacement uniforme.

3. Procédé selon la revendication 1, l'étape (i) en ce qui concerne la première itération comportant l'obtention d'une signalisation de mesure et la formation de la grille (12) d'après la signalisation de mesure.

4. Procédé selon la revendication 1, l'étape (iv) comportant un déplacement de la frontière (16') de la grille actualisée (12') pour exclure les cellules (14') présentant une valeur de probabilité inférieure au seuil prédéterminé et/ou inclure les cellules (14") présentant une valeur de probabilité supérieure au seuil prédéterminé.

5. Procédé selon la revendication 1, le modèle de mouvement étant linéaire.

6. Procédé selon la revendication 1, une ou plusieurs itérations comportant l'étape consistant à (v) calculer une espérance mathématique et une variance relatives à l'état du dispositif électronique mobile d'après la grille prédite (12").

7. Programme informatique destiné à être utilisé dans le suivi de l'état d'un dispositif électronique mobile, le programme informatique comportant du code informatique configuré pour réaliser un procédé selon la revendication 1.

8. Appareil destiné à être utilisé dans le suivi de l'état d'un dispositif électronique mobile, l'appareil comportant un processeur (100) et une mémoire (102) comprenant du code de programme informatique, la mémoire (102) et le code de programme informatique étant configurés pour faire en sorte, à l'aide du processeur (100), que l'appareil exécute de manière itérative les étapes suivantes :

(i) représenter l'état du dispositif électronique mobile à l'aide d'une grille (12) comportant une pluralité de cellules (14), chaque cellule (14) représentant une région dans un espace des états défini par une ou plusieurs variables d'état et présentant une première valeur de probabilité que l'état du dispositif électronique mobile se trouve à l'intérieur de la région en question de l'espace des états, la grille (12) étant bornée (16) pour n'inclure que les cellules (14) présentant une valeur de probabilité supérieure à un seuil prédéterminé ;
(ii) obtenir une signalisation de mesure indiquant des valeurs d'une ou plusieurs variables d'état ;
(iii) actualiser les premières valeurs de probabilité de la grille (12) pour obtenir une grille actualisée (12') comportant des cellules (14') présentant une deuxième valeur de probabilité, et déplacer la frontière (16) de la grille (12) pour exclure les cellules (14) présentant une valeur de probabilité inférieure au seuil prédéterminé et/ou inclure les cellules (14') présentant une valeur de probabilité supérieure au seuil prédéterminé, la deuxième valeur de probabilité d'une cellule (14') de la grille actualisée (12') étant déterminée en multipliant la première valeur de probabilité par l'intégrale d'une fonction (18) de vraisemblance de mesure sur la cellule (14) correspondante de la grille (12), la fonction (18) de vraisemblance de mesure représentant une position estimée du dispositif électronique mobile basée sur la signalisation de mesure ; et
(iv) prédire des troisièmes valeurs de probabilité de la grille (12) d'après la grille actualisée (12') et un modèle de mouvement du dispositif électronique mobile pour obtenir une grille prédite (12") destinée à être utilisée à l'étape (i) d'une itération ultérieure, la troisième valeur de probabilité d'une cellule (14") de la grille prédite (12") étant déterminée en sommant toutes les deuxièmes valeurs de probabilité de l'itération actuelle pondérées par la probabilité de transition vers la cellule (14") de la grille prédite (12").

9. Appareil selon la revendication 8, l'appareil étant configuré pour représenter l'état du dispositif électronique mobile en utilisant une grille parallélépipédique (12) d'espacement uniforme.

10. Appareil selon la revendication 8, l'appareil étant configuré pour représenter l'état du dispositif électronique mobile lors de la première itération en obtenant une signalisation de mesure et en formant la grille (12) d'après la signalisation de mesure.

11. Appareil selon la revendication 8, l'appareil étant configuré pour déplacer la frontière (16') de la grille actualisée (12') à l'étape (iv) pour exclure les cellules (14') présentant une valeur de probabilité inférieure au seuil prédéterminé et/ou inclure les cellules (14") présentant une valeur de probabilité supérieure au seuil prédéterminé.

**12.** Appareil selon la revendication 8, l'appareil étant configuré pour utiliser un modèle linéaire de mouvement afin de prédire les troisièmes valeurs de probabilité de la grille (12).

**13.** Appareil selon la revendication 8, l'appareil étant configuré pour calculer, dans une ou plusieurs itérations, une espérance mathématique et une variance relatives à l'état du dispositif électronique mobile d'après la grille prédite (12").

**14.** Dispositif électronique mobile comportant un appareil selon la revendication 8, l'appareil étant configuré pour être utilisé dans le suivi de l'état du dispositif électronique mobile.

**15.** Système comportant le dispositif électronique mobile selon la revendication 14 et un appareil servant à fournir une signalisation de mesure au dispositif électronique mobile.

Figure 1

Figure 2

Figure 3

Figure 4

Figure 5

**Figure 6**

## REFERENCES CITED IN THE DESCRIPTION

### Patent documents cited in the description

- WO 0239063 A

### Non-patent literature cited in the description

- **N. BERGMAN.** *Bayesian Inference in Terrain Navigation,* 1997
- **J. CHAFFEE et al.** GPS positioning, filtering, and integration. *Aerospace and Electronics Conference, Proceedings of the IEEE,* 1993, vol. 327
- **R. BUSY et al.** *Digital synthesis of non-linear filters,* 1971, vol. 7 (3), 287
- **N. BERGMAN et al.** Terrain navigation using Bayesian statistics. *IEEE Control Systems Magazine,* 1999, vol. 19 (3), 33